# EUROPEAN PATENT APPLICATION

(11) **EP 1 599 016 A1**
(43) Date of publication of application: **23.11.2005**
(21) Application number: 05251197.9
(22) Date of filing: 28.02.2005
(51) Int. Cl.: H04L 29/06

(54) **Streaming content reproduction method and internet connection device using the same**

(30) Priority: 20.05.2004 JP 2004150702
(71) Applicant: Mitsumi Electric Co., Ltd., Tama-shi, Tokyo 206-8567 (JP)
(72) Inventor: Ohtsuka, Kouji, Mitsumi Electric Co., Ltd., Atsugi-shi Kanagawa 243-8533 (JP)
(74) Representative: Rees, Alexander Ellison

(57) **Abstract**

A streaming content reproduction method establishes a connection with a provider via the Internet, and downloads and reproduces streaming content from the provider. A transmission bit rate of receive data is received from the Internet (S12). A total amount of data of the streaming content and a playback bit rate thereof is obtained from a provider (S12). A target amount of data to be buffered is calculated in advance (S14) based on a difference between the transmission bit rate and the playback bit rate and the total amount of data in order to reproduce the streaming data to its end without interruption. The streaming content downloaded from the provider is stored in a buffer. The streaming content is reproduced from the buffer (S18) after an amount of data of the streaming content stored in the buffer exceeds the target amount of data (S16).

## Description

### BACKGROUND OF THE INVENTION

### 1. Field of the Invention

The present invention generally relates to streaming content reproduction methods and Internet connection devices using the same, and more particularly, to a streaming content reproduction method of establishing a connection with a provider and downloading and reproducing streaming content.

### 2. Description of the Related Art

In generally used ADSL (Asymmetric Digital Subscriber Lines), VDSL (Very-high-bit-rate DSL), HDSL (High-bit-rate-DSL), and SDSL (Symmetric DSL) etc., data communications are performed between a user terminal and an ISP (Internet Service Provider) of a DSL service by using a high frequency band that does not affects bands used in telephone services by using existing telephone lines.

Internet connection devices using such DSL communications include an IP-STB (Internet Protocol-Set Top Box). The IP-STB is installed in, for example, a home or a hotel. When a user accesses, for example, a desired Web site or streaming content by operating a remote controller, the IP-STB displays the screen.

In addition, conventional devices performing DSL communications include, for example, a device disclosed in Japanese Laid-open Patent Application No. 2004-15274. In this application, it is disclosed that a communication control part, which performs communications with a management device of a provider and is connected to an ADSL modem via a circuit I/F part, displays on a display part the transmission bit rate of data transmitted and received in the communications with the management device.

The transmission bit rate in an Internet connection device is determined by, for example: the rate in the path from an Internet connection terminal to a server to which a connection is to be established; and the capacity and congestion degree of the server.

There is a problem in that, when streaming content such as moving images or music is reproduced and watched by an Internet connection device, if the transmission bit rate in the Internet connection device becomes lower than the playback bit rate of the streaming content, it becomes difficult or impossible to smoothly reproduce the streaming content, and the moving image or music is interrupted during the content playback.

Additionally, there is a problem in that, even if, at first, the transmission bit rate in the Internet connection device is higher than the playback bit rate of the streaming content, when the circuit conditions are changed and the transmission bit rate becomes lower than the playback bit rate, the moving image or music is interrupted during the content reproduction.

### SUMMARY OF THE INVENTION

A general object of the present invention is to provide an improved and useful streaming content reproduction method and Internet connection device using the method in which one or more of the above-mentioned problems are eliminated.

Another and more specific object of the present invention is to provide a streaming content reproduction method and an Internet connection device that can avoid interruption of content such as moving images and music during reproduction of the content.

In order to achieve the above-mentioned objects, according to one aspect of the present invention, there is provided a streaming content reproduction method of establishing a connection with a provider via the Internet, and downloading and reproducing streaming content from the provider, the streaming content reproduction method including the steps of:
measuring a transmission bit rate of receive data from the Internet;
obtaining, from the provider, a total amount of data of the streaming content and a playback bit rate thereof;
calculating a target amount of data to be buffered in advance based on a difference between the transmission bit rate and the playback bit rate and the total amount of data in order to reproduce the streaming data to its end without interruption;
storing, in a buffer, the streaming content downloaded from the provider; and
reproducing the streaming content from the buffer after an amount of data of the streaming content stored in the buffer exceeds the target amount of data.

Accordingly, it is possible to avoid interruption of content such as moving images or music during reproduction thereof.

Additionally, according to another aspect of the present invention, there is provided a streaming content reproduction method of establishing a connection with a provider via the Internet, and downloading and reproducing streaming content from the provider, the streaming content reproduction method including the steps of:
measuring a transmission bit rate of receive data from the Internet;
obtaining, from the provider, a playback bit rate of the streaming content;
when the playback bit rate is equal to or higher than the transmission bit rate, issuing, to the provider, a request for reducing the playback bit rate of the streaming content; and
when the playback bit rate is lower than the transmission bit rate, downloading and reproducing the streaming content from the provider.

Accordingly, it is possible to avoid interruption of content such as moving images or music during reproduction thereof.

Additionally, according to another aspect of the present invention, there is provided an Internet connection device establishing a connection with a provider via the Internet, and downloading and reproducing streaming content from the provider, the Internet connection device including:
a measuring part that measures a transmission bit rate of receive data from the Internet;
an obtaining part that obtains, from the provider, a total amount of data of the streaming content and a playback bit rate thereof;
a calculating part that calculates a target amount of data to be buffered in advance based on a difference between the transmission bit rate and the playback bit rate and the total amount of data in order to reproduce the streaming data to its end without interruption;
a storing part that stores, in a buffer, the streaming content downloaded from the provider; and
a reproducing part that reproduces the streaming content from the buffer after an amount of data of the streaming content stored in the buffer exceeds the target amount of data.

Accordingly, it is possible to avoid interruption of content such as moving images or music during reproduction thereof.

Additionally, according to another aspect of the present invention, there is provided an Internet connection device establishing a connection with a provider via the Internet, and downloading and reproducing streaming content from the provider, the Internet connection device including:
a measuring part that measures a transmission bit rate of receive data from the Internet;
an obtaining part that obtains, from the provider, a playback bit rate of the streaming content;
an issuing part that, when the playback bit rate is equal to or higher than the transmission bit rate, issues to the provider a request for reducing the playback bit rate of the streaming content; and
a reproducing part that, when the playback bit rate is lower than the transmission bit rate, downloads and reproduces the streaming content from the provider.

Accordingly, it is possible to avoid interruption of content such as moving images or music during reproduction thereof.

Additionally, the above-mentioned Internet connection device may further include:
a deletion part that, when the streaming content does not allow repeat playback, deletes the streaming content stored in the buffer after reproduction by the reproducing part ends.

Accordingly, it is possible to avoid repeat playback of the streaming content.

Other objects, features and advantages of the present invention will become more apparent from the following detailed description when read in conjunction with the following drawings.

### BRIEF DESCRIPTION OF THE DRAWINGS

FIG. 1 is a block diagram of an Internet connection device according to one embodiment of the present invention;
FIG. 2 is a block diagram of one embodiment of an ADSL modem;
FIG. 3 is a flowchart of a first embodiment of a streaming content reproduction process; and
FIG. 4 is a flowchart of a second embodiment of the streaming content reproduction process.

### DETAILED DESCRIPTION OF THE PREFERRED EMBODIMENTS

A description is given of an embodiment of the present invention with reference to the drawings.

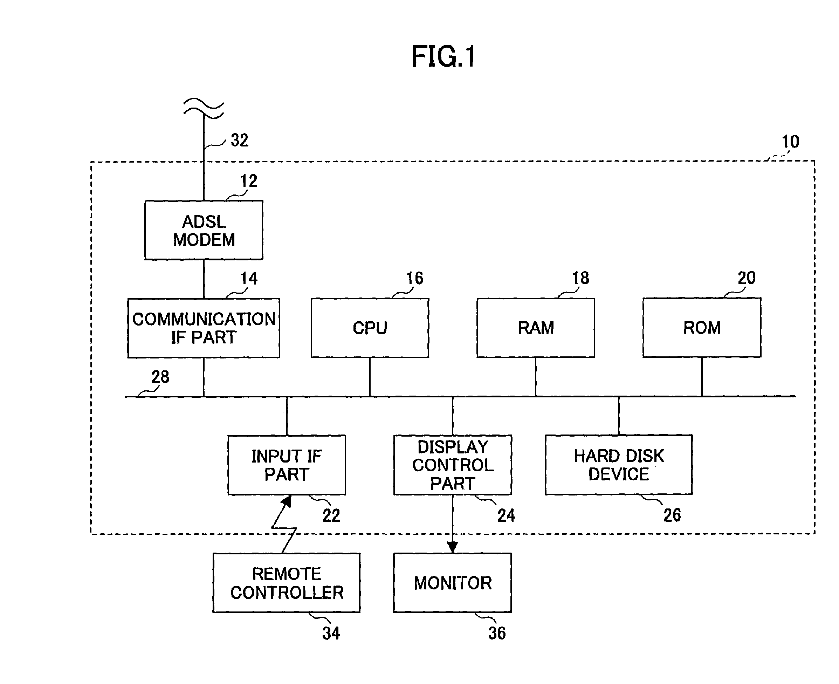

FIG. 1 is a block diagram of an Internet connection device 10 according to one embodiment of the present invention. It is assumed in this embodiment that communications are performed by using ADSL. In FIG. 1, the Internet connection device 10 includes an ADSL modem 12, a communication IF (interface) part 14, a CPU 16, a RAM 18, a ROM 20, an input IF part 22, a display control part 24, a hard disk device 26, and an internal bus 28 connected to each of the communication IF part 14, the CPU 16, the RAM 18, the ROM 20, the input IF part 22, the display control part 24, and the hard disk device 26. The internet connection device 10 is an IP-STB, which is installed in, for example, a home or a hotel, and when a user accesses, for example, a desired Web site or streaming content by operating a remote controller, displays the screen.

The ADSL modem 12 is connected to an ADSL modem (not shown) in a circuit base station via a telephone line 32, and is also connected to the communication IF part 14 via a LAN. The communication IF part 14 interfaces the internal bus 28 with the LAN. The CPU 16 executes a program stored in the ROM 20 and controls the operation of the Internet connection device 10. On this occasion, the RAM 18 is used as a work area.

The input IF part 22 includes, for example, a infrared receiving circuit, and receives an infrared operational signal that is output from a remote controller 34. It should be noted that the remote controller 34 may be connected to the input IF part 22 by using, for example a USB. The operation input by the user with the use of the remote controller 34 is read by the CPU 16 via the input IF part 22.

According to the above operation, the CPU 16 makes the ADSL modem 12 to establish a connection with the ADSL modem in the circuit base station, and performs data communications with the ISP, which is connected to the ADSL modem in the circuit base station. Thereby, IP (Internet Protocol) data supplied from the ISP are stored in the RAM 18 or the hard disk device 26, and are displayed on a monitor 36 by the display control part 24.

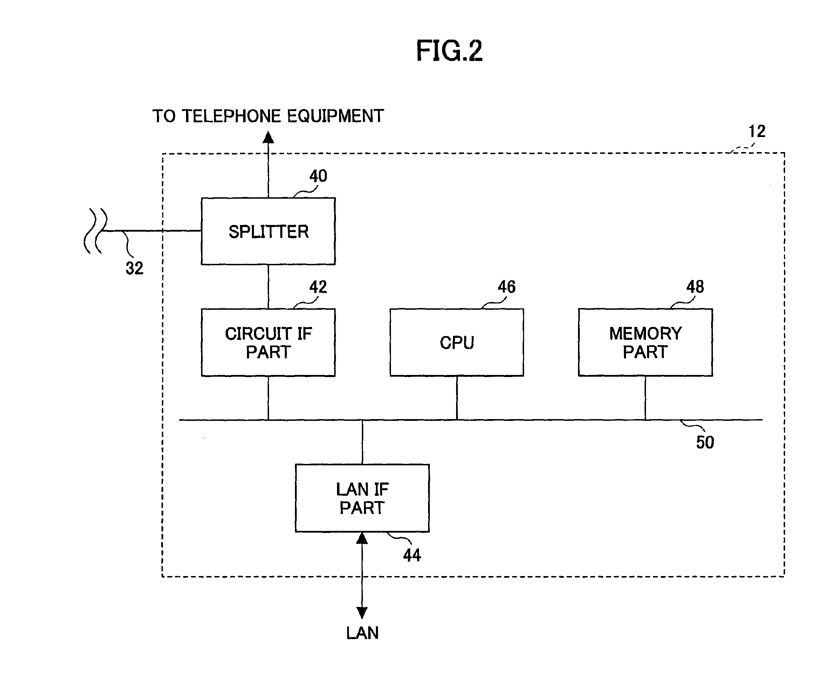

FIG. 2 is a block diagram of the ADSL modem 12 according to one embodiment. In FIG. 2, the ADSL modem 12 includes a splitter 40, a circuit IF part 42, a LAN IF part 44, a CPU 46, a memory part 48, and an internal bus 50 connected to each of the circuit IF part 42, the LAN IF part 44, the CPU 46, and the memory part 48

The splitter 40 separates an ADSL signal (high-frequency component) input from the telephone line 32 from a telephone service signal (low-frequency component). The telephone service signal is transmitted to a telephone equipment (not shown), and the ADSL signal is transmitted to the circuit IF part 42. The circuit IF part 42 interfaces the internal bus 50 with the telephone line 32. The LAN IF part 44 interfaces the internal bus 50 with the LAN, and is connected to the communication IF part 14 via the LAN.

The CPU 46 performs a process for performing data transmission and reception between the circuit IF part 42 and the LAN IF part 44 by using the memory part 48. Also, the CPU 46 performs a training process for establishing a connection with the ADSL modem in the circuit base station at the time of starting a connection. Further, the CPU 46 constantly measures the circuit state such as the current transmission bit rate of receive data that are transmitted from the ADSL modem in the circuit base station.

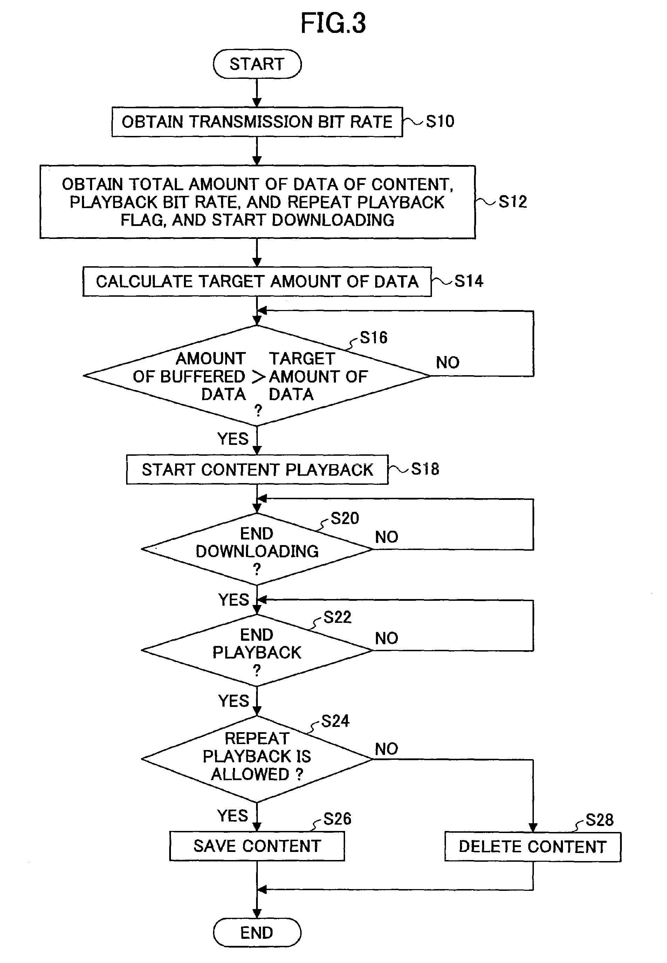

FIG. 3 is a flowchart of a first embodiment of a streaming content reproduction process performed by the CPU 16. In FIG. 3, first, in step S10, the transmission bit rate of receive data that are transmitted from the ADSL modem in the circuit base station is obtained from the ADSL modem 12. Then, in step S12, control information, such as a total amount of data of streaming content that is to be reproduced, the playback bit rate, and a repeat playback, is obtained from the provider, downloading of the streaming content is started, and the downloaded content data are buffered in the hard disk device 26.

Next, in step S14, based on the difference between the obtained transmission bit rate of receive data and the playback bit rate and the total data amount of the streaming content, it is calculated how much amount of data should be buffered in advance before starting reproduction in order to reproduce the streaming content until its end without interruption. The amount of data to be buffered in advance is referred to as a target amount of data. It should be noted that the target amount of data is 0 when the transmission bit rate of receive data is higher than the playback bit rate of the content.

In step S16, it is determined whether the amount of content data buffered in the hard disk device 26 exceeds the target amount of data. When the amount of buffered content data is equal to or less than the target amount of data, step S16 is repeated and downloading of the stream contents is continued.

When the amount of buffered content data exceeds the target amount of data, in step S18, the content data buffered in the hard disk device 26 are read, and reproduction of the streaming content is started.

Next, in step S20, it is determined whether the downloading of the streaming content ends. When it is determined that the downloading ends, the process proceeds to step S22. In step S22, it is determined whether reproduction of the streaming content ends. When it is determined that reproduction ends, the process proceeds to step S24.

In step S24, it is determined from a repeat playback flag in the control information whether it is possible to perform repeat playback of the streaming content. When it is possible to perform repeat playback, the downloaded streaming content is saved in the hard disk device 26 in step S26. When it is impossible to perform repeat playback, the downloaded streaming content is deleted from the hard disk device, and the process ends.

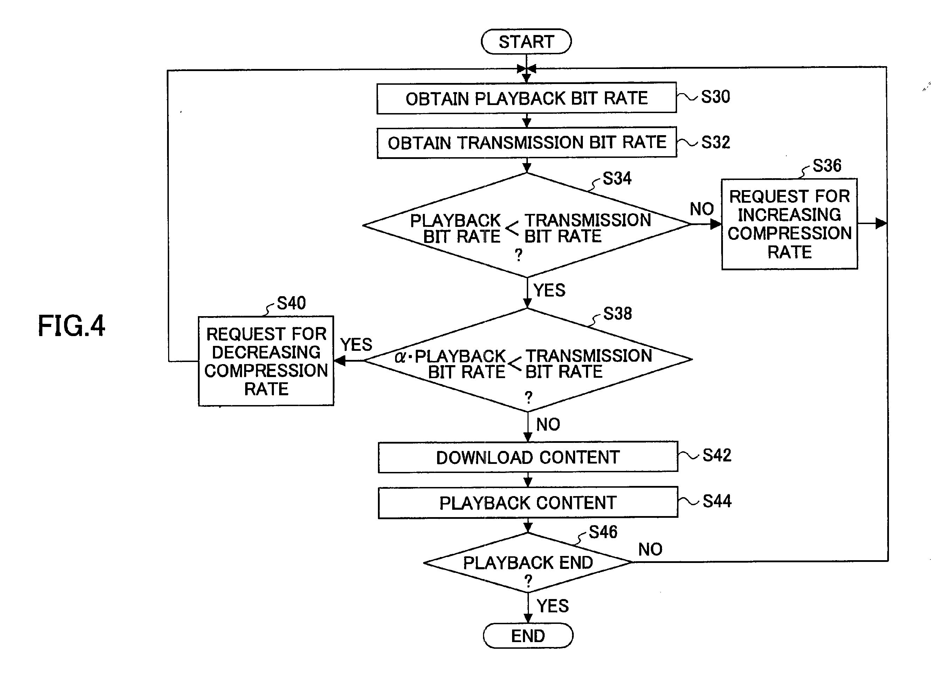

FIG. 4 is a flowchart of a second embodiment of the streaming content reproduction process performed by the CPU 16. In this embodiment, the provider, which distributes streaming content, includes a function of generating and distributing content data by changing the compression rate of, for example, moving images or music. Thereby, even if the transmission bit rate in a transmission channel is the same, when the compression rate is high, the playback bit rate of streaming content becomes low (in the case of an image, the image quality is rough), and when the compression rate is low, the playback bit rate of the streaming content becomes high (in the case of an image, the image quality if fine).

In FIG. 4, first, in step S30, control information, such as the playback bit rate and compression rate of streaming content to be reproduced, is obtained. Then, in step S32, the transmission bit rate of received data that are transmitted from the ADSL modem in the circuit base station is obtained from the ADSL modem 12.

Next, in step S34, the playback bit rate of streaming content is compared with the transmission bit rate of the receive data so as to determine whether the playback bit rate is lower than the transmission bit rate. When the playback bit rate is equal to or higher than the transmission bit rate, reproduction will be interrupted. Hence, the process proceeds to step S36, and a request for reducing the playback bit rate by increasing the compression rate with respect to, for example, moving images or music, for a fixed rate is transmitted to the provider providing the streaming content. Then, the proceeds to step S30.

On the other hand, when the playback bit rate is lower than the transmission bit rate, the value obtained by multiplying the playback bit rate by a coefficient α (e.g., α = about 1.2) is compared in step S38 with the transmission bit rate of the receive data, so as to determine whether the playback bit rate is lower than the transmission bit rate. When the value obtained by multiplying the playback bit rate by α is lower than the transmission bit rate, the process proceeds to step S40. In step S40, in order to improve the quality of content, a request for increasing the playback bit rate by reducing the compression rate with respect to, for example, moving images or music, for a fixed rate is transmitted to the provider distributing the streaming content. Then, the process proceeds to step S30.

When the value obtained by multiplying the playback bit rate by α is equal to or higher than the transmission bit rate, the process proceeds to step S42, where the streaming content is downloaded from the provider. In step S44, reproduction of the streaming content is performed, and the process proceeds to step S46. In step S46, it is determined whether reproduction of the streaming content had ended. When it is determined that reproduction has not ended, the process proceeds to step S30. When it is determined that reproduction has ended, the process ends.

It should be noted that steps S10 and S30 correspond to measuring means, steps S12 and S32 correspond to obtaining means, step S14 corresponds to calculation means, step S12 corresponds to storing means, step S18 correspond to reproducing means, step S36 corresponds to requesting means, and step S28 corresponds to deleting means.

The present invention is not limited to the specifically disclosed embodiments, and variations and modifications may be made without departing from the scope of the present invention.

## Claims

1. A streaming content reproduction method of establishing a connection with a provider via the Internet, and downloading and reproducing streaming content from the provider,
**characterized by** the steps of:
measuring a transmission bit rate of receive data from the Internet;
obtaining, from the provider, a total amount of data of the streaming content and a playback bit rate thereof;
calculating a target amount of data to be buffered in advance based on a difference between the transmission bit rate and the playback bit rate and the total amount of data in order to reproduce the streaming data to its end without interruption;
storing, in a buffer, the streaming content downloaded from the provider; and
reproducing the streaming content from the buffer after an amount of data of the streaming content stored in the buffer exceeds the target amount of data.

2. A streaming content reproduction method of establishing a connection with a provider via the Internet, and downloading and reproducing streaming content from the provider,
**characterized by** the steps of:
measuring a transmission bit rate of receive data from the Internet;
obtaining, from the provider, a playback bit rate of the streaming content;
when the playback bit rate is equal to or higher than the transmission bit rate, issuing, to the provider, a request for reducing the playback bit rate of the streaming content; and
when the playback bit rate is lower than the transmission bit rate, downloading and reproducing the streaming content from the provider.

3. An Internet connection device establishing a connection with a provider via the Internet, and downloading and reproducing streaming content from the provider,
**characterized by**:
a measuring part that measures a transmission bit rate of receive data from the Internet;
an obtaining part that obtains, from the provider, a total amount of data of the streaming content and a playback bit rate thereof;
a calculating part that calculates a target amount of data to be buffered in advance based on a difference between the transmission bit rate and the playback bit rate and the total amount of data in order to reproduce the streaming data to its end without interruption;
a storing part that stores, in a buffer, the streaming content downloaded from the provider; and
a reproducing part that reproduces the streaming content from the buffer after an amount of data of the streaming content stored in the buffer exceeds the target amount of data.

4. An Internet connection device establishing a connection with a provider via the Internet, and downloading and reproducing streaming content from the provider,
**characterized by**:
a measuring part that measures a transmission bit rate of receive data from the Internet;
an obtaining part that obtains, from the provider, a playback bit rate of the streaming content;
an issuing part that, when the playback bit rate is equal to or higher than the transmission bit rate, issues to the provider a request for reducing the playback bit rate of the streaming content; and
a reproducing part that, when the playback bit rate is lower than the transmission bit rate, downloads and reproduces the streaming content from the provider.

5. The Internet connection device as claimed in claim 3, further comprising:
a deletion part that, when the streaming content does not allow repeat playback, deletes the streaming content stored in the buffer after reproduction by the reproducing part ends.
